Europäisches Patentamt

European Patent Office

Office européen des brevets

(19)

(11) Veröffentlichungsnummer: **0 250 948 B1**

(12) # EUROPÄISCHE PATENTSCHRIFT

(45) Veröffentlichungstag der Patentschrift: 13.11.91

(51) Int. Cl.5: **F16K 31/00**, F16K 27/02, F15C 5/00

(21) Anmeldenummer: 87108294.7

(22) Anmeldetag: 09.06.87

(54) **Mikroventil.**

(30) Priorität: 26.06.86 DE 3621331

(43) Veröffentlichungstag der Anmeldung:
07.01.88 Patentblatt 88/01

(45) Bekanntmachung des Hinweises auf die
Patenterteilung:
13.11.91 Patentblatt 91/46

(84) Benannte Vertragsstaaten:
AT BE CH DE ES FR GB GR IT LI LU NL SE

(56) Entgegenhaltungen:
GB-A- 2 155 152
US-A- 3 397 278
US-A- 3 918 019
US-A- 4 203 128
US-A- 4 585 209

(73) Patentinhaber: **FRAUNHOFER-GESELLSCHAFT
ZUR FÖRDERUNG DER ANGEWANDTEN FOR-
SCHUNG E.V.**
**Leonrodstrasse 54**
**W-8000 München 19(DE)**

(72) Erfinder: **Cserpregi, Laszlo, Dipl.-Ing.**
**Schopenhauerstrasse 65**
**W-8000 München 40(DE)**
Erfinder: **Kühl, Karl, Dipl.-Ing.**
**Bronner Weg 4**
**W-8910 Landsberg(DE)**
Erfinder: **Seidel, Helmut, Dipl.-Phys.**
**Moosbichlstrasse 1**
**W-8130 Starnberg(DE)**

(74) Vertreter: **Haft, Berngruber, Czybulka**
**Hans-Sachs-Strasse 5**
**W-8000 München 5(DE)**

EP 0 250 948 B1

## Beschreibung

Die Erfindung bezieht sich auf ein Mikroventil gemäß dem Oberbegriff des Patentanspruches 1.

Derartige Mikroventile sind z. B. aus dem Forschungsbericht FB-T-84 (September 1984) des Bundesministeriums für Forschung und Technologie bekannt; vgl. dort Seiten 209 ff. Ausgangsmaterial für ein solches Mikroventil ist ein Siliziumeinkristall, auf dessen ebener (100)- oder (110)-Oberfläche eine p⁺-Epitaxieschicht aufgewachsen ist, der eine n-Distanzschicht und eine strukturbildende p⁺-Oberflächenschicht folgen. Aus dieser Oberflächenschicht ist die scheibchenförmige Verschlußmembran mit zwei dünnen Federarmen, z. B. Spiralarmen herausgeätzt, die mit dem Strukturrand des Siliziumsubstrates verbunden sind. Die Verschlußmembran ist somit federnd und senkrecht zur Scheibchenebene leicht beweglich. Aus der n-Distanzschicht ist unterhalb der Verschlußmembran und der Spiralarme eine Ventilkammer herausgeätzt, die bis zur p⁺-Epitaxieschicht reicht. Am Boden dieser Ventilkammer ist eine durch die p⁺ -Epitaxieschicht reichende Ventilöffnung vorgesehen, die in einen durch den Siliziumeinkristall hindurchgehenden Ätzkanal mündet. Die Begrenzungswände dieses Ätzkanales fallen mit den (111)-Kristallschichten zusammen.

Die Betätigung der Verschlußmembran erfolgt durch elektrostatische Kräfte, indem zwischen die p⁺-Epitaxieschicht und die p⁺-Oberflächenschicht eine Steuerspannung angelegt wird. Die p-n-Übergänge sind zur elektrischen Isolation notwendig.

Damit verbunden sind jedoch Nachteile in bezug auf die Temperaturempfindlichkeit und die maximal zulässige Steuerspannung.

Ein weiterer Nachteil liegt darin, daß die Verschlußmembran bei geschlossenem Mikroventil, wenn die Verschlußmembran an der p⁺-Epitaxieschicht anliegt, elektrisch gegenüber dieser isoliert werden muß. Hierzu wird die Oberfläche der Verschlußmembran oxidiert, wodurch bei der Herstellung des Mikroventiles ein weiterer Oxidationsschritt erforderlich ist. Hierdurch entstehen jedoch starke mechanische Spannungen in der Verschlußmembran und den Spiralarmen.

Aus der US-A-4,585,209 ist ebenfalls ein Mikroventil bekannt, das als Verschlußkörper eine aus einem Siliziumsubstrat herausgeätzte federnde Zunge aufweist, die auf einer Ventilöffnung bzw. mehreren Ventilöffnungen in einem darunterliegenden Substrat, einem Glassubstrat, aufliegt. Wenn ein Medium durch das Ventil strömt, so wird die Siliziumzunge aus ihrer Lage auf den Ventilöffnungen abgebogen, soll das Ventil geschlossen werden, so wird zwischen Siliziumzunge und einer Gegenelektrode eine Spannung angelegt, durch die die Siliziumzunge in ihrer Lage auf dem Substrat festgehalten wird. Durch diese Funktionsweise ist es schwierig, die das Mikroventil durchströmenden Mengen exakt zu reproduzieren.

Es wäre weiterhin wünschenswert, mit einer Vielzahl von derartigen Mikroventilen auch mehrere Strömungsmedien kombinieren zu können. Mit den bisher bekannten Konstruktionen ist dies allerdings nur mit einem hohen fertigungstechnischen Aufwand möglich.

Der Erfindung liegt die Aufgabe zugrunde, ein Mikroventil der in Rede stehenden Art weiterzuentwickeln, bei einfacher Fertigung dessen Schalteigenschaften zu verbessern und eine Konstruktion anzugeben, mit der eine Vielzahl derartiger Mikroventile miteinander kombiniert werden kann.

Diese Aufgabe ist gemäß der Erfindung durch die im kennzeichnenden Teil des Patentanspruches 1 angegebenen Merkmale gelöst. Demgemäß werden mehrere Mikroventile in einer Baugruppe aus einem Siliziumsubstrat und einem weiteren Substrat aufgebaut, wobei in diesem Siliziumsubstrat und/oder im weiteren Substrat Sammelkanäle vorgesehen sind, die die Ventilkanäle bzw. Ventilöffnungen verschiedener Mikroventile miteinander verbinden. Auf diese Weise lassen sich Gas- oder Fluidverteiler und Gas- oder Fluidmischer für vielfältige Anwendungen herstellen.

Das weitere Substrat ist z. B. ein Glassubstrat, wobei die Gegenelektrode auf der Glasoberfläche, z. B. durch Aufdampfen aufgebracht ist. Die Oberfläche der Gegenelektrode ist mit einer Passivierungsschicht versehen. Herstellung und Behandlung der Gegenelektrode auf dem Glassubstrat erfolgen vor der Verbindung mit dem Siliziumsubstrat. Das Siliziumsubstrat wird lediglich unter Anwendung der Ätz- und Phototechnik behandelt, so daß die mechanischen Eigenschaften nicht negativ - etwa durch Oxidationsschritte - beeinflußt werden. Durch die Verbindung von Glas- und Siliziumsubstrat werden kaum mechanische Spannungen in der strukturbildenden Schicht erzeugt. Die Verbindung erfolgt bevorzugt durch anodisches Bonden bei kurzzeitiger Temperaturanhebung auf ca. 400˚ C. Die beim anschließenden Abkühlen auftretenden Schubspannungen vom Glasrand her werden durch einen geeigneten Rahmen für den Siliziumchip abgefangen, so daß die strukturbildende Schicht mit der Verschlußmembran hierdurch nicht direkt betroffen wird.

Durch die angegebene Sandwich-Bauweise können die Temperatureinflüsse auf das Mikroventil verringert und dessen Schalteigenschaften verbessert werden. Außerdem kann auch die Steuerspannung für die Betätigung der Verschlußmembran angehoben werden, ohne daß Isolationsprobleme entstehen.

Ohne elektrische Ansteuerung wirkt das Mikroventil wie ein Rückschlagventil . In diesem Falle kann die Gegenelektrode fortgelassen werden. Auch eine Anwendung des Mikroventiles als Mikropumpe ist möglich. Hierzu wird entweder die Verschlußmembram entsprechend schnell periodisch angesteuert. Eine weitere Möglichkeit besteht darin, auf der Gegenelektrode keine elektrisch isolierende Passivierungsschicht vorzusehen, so daß bei Anlegen einer Steuerspannung zwischen Gegenelektrode und Verschlußmembran periodisch durch zunächst anziehende und nach Berührung abstoßende elektrostatische Kräfte die Verschlußmembran oszilliert.

Durch die Anwendung der aus der Halbleiterfertigung bekannten Siliziumtechnologie können Mikroventile in großen Stückzahlen bei geringen Preisen hergestellt werden. Außerdem ist es möglich, auf dem Siliziumsubstrat eine Steuerschaltung oder Steuerlogik mit Zugriff auf externe Speicher wie ROM's auf einem zusätzlichen Chip (Hybridtechnik) zu integrieren oder mit Mitteln und Methoden der Hybridtechnik zu kombinieren.

Die geometrischen Abmessungen und das Gewicht derartiger Mikroventile sind kleiner als feinmechanisch hergestellte Strukturen. Außerdem ist die erforderliche Schaltleistung sehr gering.

Mikroventile gemäß der Erfindung können z. B. in der Medizin, der Pharmaindustrie, der Biotechnik, Luft- und Raumfahrt oder in Verbindung mit Meßgeräten, z. B. Analysegeräten für die Gaschromatographie angewendet werden.

Weitere Ausgestaltungen der Erfindung gehen aus den Unteransprüchen hervor. Die Erfindung ist in Ausführungsbeispielen anhand der Zeichnung näher erläutert. In der Zeichnung stellen dar:

Figur 1    einen Querschnitt durch ein Mikroventil mit einem Teil einer schematisch angedeuteten integrierten Ansteuerschaltung zur Erläuterung der Erfindung;

Figur 2    eine Aufsicht auf das Mikroventil;

Figur 3    einen Querschnitt durch ein Mikroventil gemäß der Erfindung in Form einer Baugruppe mit mehreren Mikroventilen.

Ein Mikroventil 1 ist aufgebaut ausgehend von einem monokristallinen Siliziumsubstrat 2 mit einer (100)- oder (110)-Oberflächenorientierung und mit einer Dotierkonzentration $\leq 10^{19}$ cm$^{-3}$. Die Unterseite des Siliziumsubstrates 2 ist oxidiert und als elektrisch isolierende SiO$_2$-Schicht dargestellt. Auf der Oberseite des Siliziumsubstrats 2 ist eine strukturbildende Schicht 4 vorgesehen, die aus einer aufgewachsenen p$^+$-Epitaxialschicht 5 und einer für die nachfolgenden Phototechnik- und Ätzschritte erforderlichen Passivierungsschicht 6 besteht. Die Schicht 5 ist hoch dotiert mit einer Borkonzentration $\geq 10^{20}$ cm$^{-3}$ und dient zugleich als Ätzstopschicht für die folgenden Ätzschritte.

Durch isotropes Ätzen dieser strukturbildenden Schicht 4 z. B. mit einer HF-HNO$_3$-CH$_3$COOH-Mischung werden bevorzugt eine kreisförmige Verschlußmembran 7 und Haltearme 8 geformt, die von der Verschlußmembran 7 bis zum Rand eines Ventilkanales 9 in dem monokristallinen Siliziumsubstrat 2 reichen. Der pyramidenstumpfförmige Ventilkanal 9 wurde durch anisotropes Ätzen längs der (111)-Kristallebenen des Siliziumsubstrates 2 gewonnen. Die SiO$_2$-Schicht 3 an der Unterseite des Siliziumsubstrates 2 ist am Boden des Ventilkanales 9 durchbrochen, so daß hier eine Ventilöffnung 10 entsteht.

Auf die Oberseite der strukturbildenden Schicht 4 ist epitaktisch eine n-Distanzschicht 11 aus niedriger dotiertem Silizium aufgebracht, aus der eine Grube als Ventilkammer 12 und Leiterbahngräben 13 herausgeätzt sind.

Auf dem so vorbereiteten Silizium-Chip wird eine Deckschicht aufgesetzt, die auf einem dünnen plattenförmigen Glassubstrat 14 aufgebaut ist. Material des Glassubstrates ist vorzugsweise ein Borosilikatglas, z. B. Pyrex, mit annähernd dem gleichen Wärmeausdehnungskoeffzienten wie der Silizium-Chip.

Auf die Unterseite des Glassubstrates 14 wird eine Metallschicht aufgedampft oder durch Sputtern aufgebracht und durch entsprechende Photo- und Ätzschritte strukturiert zu einer in diesem Falle kreisförmigen Gegenelektrode 15 zur Verschlußmembran 7, einer damit verbundenen Leiterbahn 16, die in einem ersten Anschluß 17 endet, sowie zu einer weiteren Leiterbahn 18, die in einem zweiten Anschluß 19 endet, Die Leiterbahn 16 verläuft in den Leiterbahngräben 13 elektrisch isoliert gegenüber dem Silizium-Chip, die Leiterbahn 18 ist in Kontakt mit dem Silizium-Chip.

In der Mitte der Gegenelektrode 15 ist das Glassubstrat 14 zu einer Ventilöffnung 20 durchbohrt, z. B. durch Lasereinsatz, Sandstrahlen oder konventionelles Bohren oder Ultraschallbohren.

Die Flächen der Anschlüsse 17 und 19 dienen als Verbindungsflächen für die Verbindung des Siliziumchips mit externen Anschlüssen durch Bonddrähte zu Testzwecken.

Auf die Gegenelektrode 15 wird noch eine Passivierungsschicht 21 aufgebracht, um die Gegenelektrode 15 auch bei Anlage der Verschlußmembran 7 gegenüber dieser elektrisch zu isolieren.

Liegt bei dem derart aufgebauten Mikroventil 1 keine Spannung zwischen den Anschlüssen 17 und 19, so ist das Mikroventil wie dargestellt offen. Wird eine Spannung zwischen die Anschlüsse angelegt, so wird zwischen der Verschlußmembran 7 und der Gegenelektrode 15 ein elektrostatisches Feld erzeugt, so daß sich die Verschlußmembran 7 in Richtung auf die Gegenelektrode bewegt, sich an diese anlegt und die Ventilöffnung 20 verschließt. Das Mikroventil ist dann geschlossen.

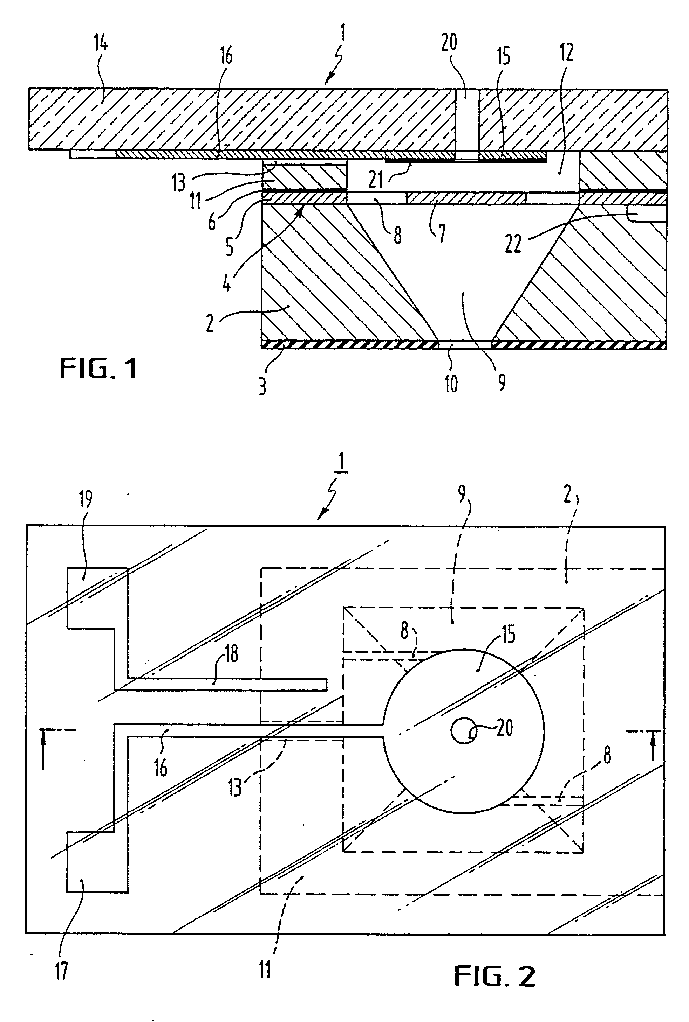

Innerhalb des Siliziumchips kann noch eine Ansteuerschaltung 22 integriert sein, die in Figur 1 nur angedeutet ist. Schaltungselemente würden sich dann in der n-Epischicht 11 befinden.

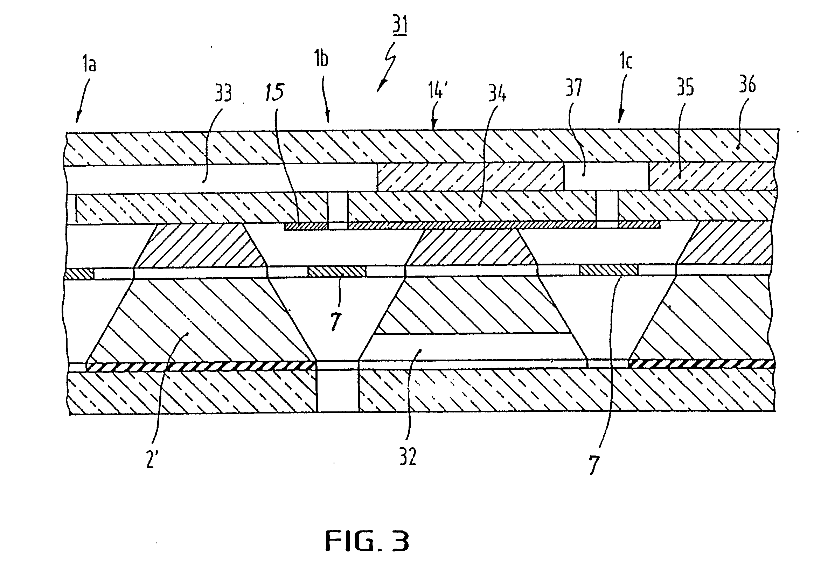

In Figur 3 ist eine Baugruppe 31 als Sandwich-Konstruktion aus Silizium und Glas mit mehreren Mikroventilen, in diesem Fall den Mikroventilen 1a, 1b und 1c gezeigt. Einund Auslaßöffnungen der Mikroventile können in bestimmten Anordnungen miteinander verbunden sein, um so Verteiler-, Misch- oder Steuerschaltungen zu bilden.

In Figur 3 sind die Eingangsöffnungen der Mikroventile 1b und 1c durch einen Verbindungskanal 32 im Siliziumsubstrat 2' und die Auslaß-Ventilöffnungen der Mikroventile 1a und 1b durch einen Verbindungskanal 33 im Glassubstrat 14' miteinander verbunden.

In Figur 3 ist das Glassubstrat 14' aus einzelnen Platten 34, 35 und 36 aufgebaut. Die Platte 34 entspricht hierbei dem oben beschriebenen Glassubstrat 14, trägt also die elektrischen Leiterbahnen und die Gegenelektroden 15. Hierauf ist die zweite Platte 35 gelegt, die als Verteilerplatte aufgebaut ist und in der die Verbindungskanäle 33 sowie weitere Auslaßkanäle 37, hier für das Mikroventil 1c, angeordnet sind. Diese Platte ist dann mit der weiteren Platte 36 abgedeckt. Es ist auch ein dickes Glassubstrat denkbar, in dem sich durch geeignete Herstellverfahren, z. B. Bohren oder Ätzen geschaffene Ventilöffnungen und Verbindungskanäle in verschiedenen Ebenen befinden. Statt eines Glassubstrats ist auch ein zweiter Siliciumchip als Trägersubstanz möglich; in diesem Fall würde auf das Substrat eine dünne Schicht Pyrex aufgesputtert werden, um eine Verbindung durch anodisches Bonden zu ermöglichen. Eine weitere Verbindungstechnik wäre Kaltlegieren z. B. mit Gold.

Auch in dieser Baugruppe können innerhalb des Silizium-Chips Steuerschaltungen integriert sein, wie oben zu Figur 1 beschrieben.

## Patentansprüche

1. Mikroventil mit einer auf elektrostatische Kräfte ansprechenden Verschlußmembran (7), die mit Federelementen (8) mit dem Strukturrand eines Siliziumsubstrates (2') einstückig verbunden ist und aus diesem mittels Ätzen hergestellt ist, sowie mit einer durch die Verschlußmembran (7) zu verschließenden und freizugebenden Ventilöffnung (20), in deren Bereich eine Gegenelektrode (15) zu der Verschlußmembran (7) angeordnet ist, von der die Verschlußmembran (7) in Offenstellung durch eine Distanzschicht (11) in Abstand gehalten wird, dadurch gekennzeichnet, daß mehrere Mikroventile (1a, 1b, 1c) in einer Baugruppe aus einem Siliziumsubstrat (2') und einem weiteren Substrat (14') aufgebaut sind, daß die Gegenelektrode (15) auf der Oberfläche des weiteren Substrates (14') angeordnet ist, in dem auch die Ventilöffnung (20) vorgesehen ist, und daß im Siliziumsubstrat (2') und/oder im weiteren Substrat (14') die Ventilkanäle (9) bzw. die Ventilöffnungen (10, 20) verschiedener Mikroventile (1a, 1b, 1c) verbindende Sammelkanäle (32, 33) vorgesehen sind.

2. Mikroventil nach Anspruch 1, dadurch gekennzeichnet, daß das weitere Substrat (14') aus mehreren übereinanderliegenden Platten (34, 35, 36) aufgebaut ist, wobei die dem ersten Substrat (2') direkt gegenüberliegende Platte (34) die Gegenelektrode (15) trägt, und daß zumindest die daraufliegende Platte (35) eine Verteilerplatte mit einem Kanalnetz (33, 37) und eine weitere Platte (36) eine Deckplatte ist.

3. Mikroventil nach Anspruch 1 oder 2, dadurch gekennzeichnet, daß das weitere Substrat (14') ein Glassubstrat oder ein weiteres Siliziumsubstrat ist.

4. Mikroventil nach einem der vorhergehenden Ansprüche, dadurch gekennzeichnet, daß die Gegenelektrode (15) auf der der Verschlußmembran (7) zugewandten Oberfläche eine elektrisch isolierende Passivierungsschicht (21) trägt.

5. Mikroventil nach einem der vorhergehenden Ansprüche, dadurch gekennzeichnet, daß die Distanzschicht (11) eine epitaxial abgeschiedene Siliziumschicht ist.

6. Mikroventil nach Anspruch 5, dadurch gekennzeichnet, daß das weitere Substrat (14) und die Distanzschicht (11) durch anodisches Bonden miteinander verbunden sind.

7. Mikroventil nach einem der vorhergehenden Ansprüche, dadurch gekennzeichnet, daß auf der der Gegenelektrode (15) abgewandten Seite der Verschlußmembran (7) in das Siliziumsubstrat (2') ein Ventilkanal (9) eingeätzt ist, dessen Begrenzungswände mit den (111)-Kristallebenen zusammenfallen.

8. Mikroventil nach einem der vorhergehenden Ansprüche, dadurch gekennzeichnet, daß in dem Siliziumsubstrat (2') eine elektronische Ansteuerschaltung (22) integriert ist.

## Claims

1. A microvalve having a closing membrane (7) responding to electrostatic forces which is integrally connected via spring members (8) with the structural edge of a silicon substrate (2') and produced therefrom by means of etching, and a valve opening (2a) to be closed and released by the closing membrane (7), a counterelectrode (15) for the closing membrane (7) being disposed in the area of the valve opening and the closing membrane (7) being held at a distance from said electrode in the open position by a distance layer (11), characterized in that a plurality of microvalves (1a, 1b, 1c) are built up in one unit from a silicon substrate (2') and a further substrate (14'), the counterelectrode (15) is disposed on the surface of the further substrate (14') in which the valve opening (20) is also provided, and collecting channels (32, 33) connecting the valve ports (9) or the valve openings (10, 20) of different microvalves (1a, 1b, 1c) are provided in the silicon substrate (2') and/or in the further substrate (14').

2. The microvalve of claim 1, characterized in that the further substrate (14') is built up from a plurality of superjacent plates (34, 35, 36), whereby the plate (34) directly opposite the first substrate (2') bears the counterelectrode (15), and at least the plate (35) located thereupon is a distributing plate having a channel system (33, 37), and a further plate (36) is a cover plate.

3. The microvalve of claim 1 or 2, characterized in that the further substrate (14') is a glass substrate or a further silicon substrate.

4. The microvalve of any of the preceding claims, characterized in that the counterelectrode (15) bears an electrically insulating passivation layer (21) on the surface facing the closing membrane (7).

5. The microvalve of any of the preceding claims, characterized in that the distance layer (11) is an epitaxially deposited silicon layer.

6. The microvalve of claim 5, characterized in that the further substrate (14) and the distance layer (11) are inter-connected by anodic bonding.

7. The microvalve of any of the preceding claims, characterized in that a valve port (9) whose limiting walls coincide with the (111) crystal planes is etched into the silicon substrate (2') on the side of the closing membrane (7) facing away from the counterelectrode (15).

8. The microvalve of any of the preceding claims, characterized in that an electronic drive circuit (22) is integrated into the silicon substrate (2').

**Revendications**

1. Microvanne comportant une membrane (7) de fermeture répondant à des forces électrostatiques qui est reliée d'une pièce par des éléments de ressort (8) avec le bord de structure d'un substrat au silicium(2') et à partir duquel elle est fabriquée par morsure, ainsi qu'une ouverture de vanne (20) à fermer et à libérer par la membrane de fermeture (7), dans la zone de laquelle est disposée une contre-électrode (15) vers la membrane de fermeture (7), la membrane de fermeture (7) en position ouverte étant maintenue à distance de la contre-électrode par une couche d'écartement (11), caractérisée en ce que plusieurs microvannes (1a, 1b, 1c) sont agencées dans un groupe structurel constitué d'un substrat au silicium (2') et d'un autre substrat (14'), en ce que la contre-électrode (15) est disposée sur la surface de l'autre substrat (14') dans lequel est également prévue l'ouverture de la vanne (20), et en ce que dans le substrat au silicium (2') et/ou dans l'autre substrat (14') sont prévus des canaux collecteurs (32, 33) reliant les canaux de vanne (9) ou ouvertures de vanne (10, 20) de différentes micro-vannes (1a, 1b, 1c).

2. Microvanne selon la revendication 1, caractérisée en ce que l' autre substrat (14') est constitué de plusieurs plaques superposées (34, 35, 36), la plaque (34) faisant directement face au premier substrat (2') portant la contre-électrode (15), et en ce qu'au moins la plaque (35) posée par dessus est une plaque de distribution comportant un réseau de canaux (33, 37) et une autre plaque (36) est une plaque de couverture.

3. Microvanne selon la revendication 1 ou 2, caractérisée en ce que l'autre substrat (14') est un substrat de verre ou un autre substrat au silicium.

4. Microvanne selon l'une des revendications précédentes, caractérisée en ce que la contre-électrode (15) porte une couche de passivation électriquement isolante (21) sur la surface orientée vers la membrane de fermeture (7).

5. Microvanne selon l'une des revendications précédentes, caractérisée en ce que la couche d'écartement (11) est une couche au silicium déposée épitaxialement.

6. Microvanne selon la revendication 5, caractérisée en ce que l'autre substrat (14) et la couche d'écartement (11) sont reliés entre eux par bonding anodique.

7. Microvanne selon l'une des revendications précédentes, caractérisée en ce qu'un canal de vanne est gravé dans le substrat au silicium (2') sur le côté de la membrane de fermeture (7) opposé à la contre-électrode (15), les parois de limitation dudit canal coïncidant avec les niveaux de cristal (111)..

8. Microvanne selon l'une des revendications précédentes, caractérisée en ce qu'un circuit de commande (22) électronique est intégré dans le substrat au silicium (2').

FIG. 1

FIG. 2

FIG. 3

EP 0 250 948 B1